(19) Europäisches Patentamt / European Patent Office / Office européen des brevets

(11) **EP 2 122 133 B1**

(12) **FASCICULE DE BREVET EUROPEEN**

(45) Date de publication et mention
de la délivrance du brevet:
**16.05.2012   Bulletin 2012/20**

(51) Int Cl.:
*F01N 3/035* *(2006.01)*     *F01N 3/20* *(2006.01)*
*F01N 9/00* *(2006.01)*      *F01N 11/00* *(2006.01)*

(21) Numéro de dépôt: **08775700.1**

(22) Date de dépôt: **10.03.2008**

(86) Numéro de dépôt international:
**PCT/FR2008/050397**

(87) Numéro de publication internationale:
**WO 2008/129184 (30.10.2008 Gazette 2008/44)**

(54) **PROCEDE D'INJECTION D'UREE A BASSE TEMPERATURE**

UREA-INJEKTIONSVERFAHREN MIT NIEDRIGER TEMPERATUR

LOW TEMPERATURE UREA INJECTION METHOD

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **22.03.2007   FR 0753990**

(43) Date de publication de la demande:
**25.11.2009   Bulletin 2009/48**

(73) Titulaire: **Peugeot Citroën Automobiles SA
78140 Vélizy-Villacoublay (FR)**

(72) Inventeur: **CREHAN, Gabriel
F-75019 Paris (FR)**

(74) Mandataire: **Ménès, Catherine
Peugeot Citroën Automobiles SA
Propriété Industrielle (LG081)
18, rue des Fauvelles
92250 La Garenne Colombes (FR)**

(56) Documents cités:
**DE-A1- 10 301 606     DE-A1-102005 035 554
FR-A- 2 872 544     FR-A- 2 875 843
US-A1- 2007 044 456     US-B1- 6 427 439**

**Description**

La présente invention concerne une stratégie d'injection d'urée dans la ligne d'échappement d'un moteur, plus particulièrement d'un moteur installé dans un véhicule automobile de type Diesel.

Dans les moteurs de véhicule de type Diesel, la combustion du carburant a pour conséquence la création de gaz tels que le monoxyde d'azote (NO), le dioxyde d'azote(NO2) ou encore l'oxyde de diazote (N2O).

Ces gaz, connus de manière générale sous le nom d'oxydes d'azote (NOx) présentent un danger, d'une part pour la santé des êtres humains, et d'autre part pour l'environnement puisqu'ils contribuent à la formation de brouillard de pollution dans les villes, et au réchauffement de la planète en augmentant l'effet de serre. En conséquence, il est nécessaire de prévoir des solutions pour détruire ces gaz à l'intérieur des véhicules, avant qu'ils ne soient émis dans l'atmosphère. Le traitement de ces gaz dans les véhicules est d'ailleurs sévèrement règlementé par différentes normes.

Pour détruire chimiquement ces oxydes d'azote avant leur échappement dans l'atmosphère, on a envisagé d'effectuer une réduction de type réduction catalytique sélective, dite SCR.

A cet effet, il est possible d'utiliser différents agents réducteurs.

Une première possibilité, qui consiste à utiliser des hydrocarbures en tant qu'agent réducteur, présente le double inconvénient d'être à la fois coûteuse, à cause du prix actuel du carburant, et d'être polluante, puisqu'elle conduit à une augmentation des dégagements de dioxyde de carbone en sortie du moteur du véhicule.

Pour remédier à ces inconvénients, de nombreuses solutions utilisant de l'urée en tant qu'agent réducteur ont été proposées voir par example le document DE 10 2005 035 554 A. ou le document US 6 427 436 B. En effet, l'urée contient de l'ammoniac qui réagit avec les oxydes d'azote dans un catalyseur SCR, pour former du diazote totalement inoffensif. La plupart de ces solutions mettent en oeuvre une injection d'urée sous forme liquide. L'injection est effectuée dans la ligne d'échappement, à une température supérieure à 180 °C.

A cette température, la décomposition de l'urée en ammoniac est totale et quasiment instantanée, ce qui permet d'utiliser un taux d'injection relativement élevé, par exemple de l'ordre de 20g/h. Cette vitesse de décomposition est, en partie, à la stabilité thermodynamique de l'urée et à la taille des gouttelettes d'urée injectées.

Le choix d'utiliser de l'urée à la place de l'ammoniac pur tient au fait que l'ammoniac est un gaz toxique et corrosif, et qu'il est donc coûteux et compliqué de prévoir dans un véhicule classique un réservoir permettant le stockage d'un tel gaz en sécurité. L'urée, quant à elle, peut-être stockée sous forme de solution aqueuse, ce qui permet un stockage et une injection dans la ligne d'échappement facilités.

La réduction des oxydes d'azote en utilisant de l'urée liquide met en oeuvre plusieurs réactions chimiques successives.

Une solution d'urée injectée dans une ligne d'échappement subit, en premier lieu, une évaporation de l'eau, conduisant ainsi à la formation d'urée solide, sous la forme d'infimes particules.

Cette réaction se traduit par l'équation chimique suivante :

$$NH2\text{-}CO\text{-}NH2_{(aqueux)} \rightarrow NH2\text{-}CO\text{-}NH2_{(solide)}. \quad (Eq1)$$

Généralement, suite à cette évaporation, l'urée solide subit une thermolyse sous l'effet de la température élevée des gaz environnants, à partir de 180°C. Cette thermolyse produit de l'ammoniac gazeux et de l'acide isocyanique au cours de la réaction suivante :

$$NH2\text{-}CO\text{-}NH2_{(solide)} \rightarrow NH3_{(gaz)} + HNCO_{(gaz)} \quad (Eq2)$$

La dernière étape du processus de réduction consiste en une hydrolyse de l'acide isocyanique pour former de l'ammoniac gazeux et du dioxyde de carbone : $HNCO_{(gaz)} + H2O_{(gaz)} \rightarrow NH3_{(gaz)} + CO2_{(gaz)}$ (Eq3)

En dessous de 180°C, la vitesse de la décomposition des particules d'urée par thermolyse est plus lente que la vitesse de polymérisation partiale d'urée. En conséquence, les particules d'urée se transforment en biuret. Le biuret se décompose rapidement par sublimation au dessus de 180°C ou, en dessous de 180°C, sur n'importe quelle surface catalytique qui contient des sites acide. Les deux formes de la décomposition de biuret peut être décrites d'une manière globale par la réaction suivante :

$$H2NCONHCONH2_{(solide)} + 2 \times H2O_{(gaz)} \rightarrow NH3_{(gaz)} + CO2_{(gaz)}$$

$$(Eq4)$$

Or, on a constaté que, dans les véhicules légers, la température dans la ligne d'échappement se situait régulièrement en dessous de 180°C, notamment à cause des décélération ou arrêts fréquents du véhicule, ou d'une conduite prolongée en ville à basse vitesse.

Lorsque la température de l'urée injectée dans la ligne d'échappement devient inférieure à 180°C, il n'y a plus de décomposition totale, et on voit alors apparaître une polymérisation totale de l'urée à forte concentration, et la formation d'un solide blanc sur la surface du catalyseur SCR ou sur les parois de la ligne d'échappement.

En effet, ainsi qu'expliqué précédemment, l'étape de thermolyse de l'urée solide, représentée par l'équation 2, se produit grâce à la température élevée des gaz d'échappement. Lorsque la température est plus faible, on voit se former un polymère solide cyamelide: $NH_2\text{-}CO\text{-}NH_{2(solide)} \rightarrow HNCOX_{(polymère\ solide)}$ (Eq5)

Cette réaction n'a lieu que sur une partie de l'urée qui s'accumule en forte concentration sur la surface du catalyseur, l'autre partie subissant une thermolyse conforme à celle décrite précédemment. La formation du polymère solide se produit au moment où la décomposition d'urée par thermolyse en phase gazeuse ou par décomposition catalytique sur la surface du catalyseur devient plus lente que la réaction d'accumulation d'urée sur la surface du catalyseur.

Dans ce cas, la surface du catalyseur est recouverte d'un polymère, et l'ammoniac n'entre plus en contact avec les oxydes d'azote, ce qui rend impossible la réduction de ces derniers. La vitesse de décomposition de biuret se ralentit en fonction de la température. La vitesse de polymérisation d'urée dépend, quant à elle, de la concentration locale des molécules d'urée ou de biuret. Ainsi, plus que la concentration est élevée, plus le risque de polymérisation est important, surtout à faible température.

En outre, pour détruire le solide polymérisé déposé sur les différents éléments de la ligne d'échappement, il est nécessaire d'élever la température jusqu'à une valeur d'environ 450°C. Or, le fait de porter régulièrement le catalyseur à une température si élevée risque de détruire les zones actives du catalyseur, indispensables pour la mise en oeuvre des réactions chimiques de réduction.

Une solution pour maîtriser l'accumulation d'urée sur la surface du catalyseur SCR et le risque de polymérisation consisterait donc à contrôler la quantité d'urée injectée dans la ligne d'échappement, en fonction de la température.

L'invention vise ainsi à remédier à ces inconvénients en proposant un procédé d'injection d'urée pouvant être mis en oeuvre à n'importe quelle température, et notamment à basse température.

De manière plus précise, l'invention concerne un procédé d'injection d'urée dans une ligne d'échappement d'un moteur, l'urée contenant de l'ammoniac destiné à être utilisé pour réduire chimiquement, au cours d'une réaction de réduction catalytique sélective, dite SCR, des oxydes d'azote émis par le moteur. L'injection est effectuée en amont d'un catalyseur dans lequel a lieu la réaction, et le procédé comprend les étapes suivantes :

- on mesure la température dans la ligne d'échappement du moteur,
- on détermine une quantité d'urée à injecter, à partir d'une relation connue entre la température et une quantité d'urée à injecter, pour l'ensemble des valeurs de température de fonctionnement possibles.
- on injecte la quantité d'urée déterminée dans la ligne d'échappement du moteur.

Un tel procédé permet de déterminer, en fonction de la température des gaz d'échappement, la quantité d'urée pouvant être injectée en toute sécurité, c'est à dire sans risque de polymérisation pouvant conduire à une mauvaise destruction des oxydes d'azote.

Ainsi, lorsque la température est inférieure à 180°C, on peut choisir d'injecter quand même de l'urée, mais sous une concentration inférieure, de manière à ce que toute l'urée injectée subisse une décomposition en ammoniac, et qu'il n'y ait pas de polymérisation.

Un procédé conforme à l'invention permet de déterminer, quelle que soit la température présente dans la ligne d'échappement, une quantité d'urée pouvant être injectée dans la ligne d'échappement sans risque de polymérisation. Cette quantité d'urée est déterminée en utilisant une relation liant la température des gaz à une quantité d'urée, sur une plage de valeurs couvrant l'ensemble des températures susceptibles d'être relevées dans la ligne d'échappement.

Cette relation peut être exprimée sous forme d'une relation mathématique, telle qu'une équation polynomiale, d'un graphe ou encore d'une table de correspondance.

Ces données sont, par exemple, enregistrées en mémoire d'un processeur auquel fait appel le procédé pour la mise en oeuvre des différentes étapes.

De telles données sont préférentiellement déterminées expérimentalement, puisqu'elles diffèrent d'une ligne d'échappement à l'autre. En effet, elles dépendent de caractéristiques physiques des différents éléments composant cette ligne, telles que le type de moteur, le type de technologie utilisée pour l'injection, ou encore le type et la taille de catalyseur.

Bien que les données utilisées pour le calcul de la quantité d'urée soient déterminées expérimentalement, il peut s'avérer que le calcul soit faussé par des paramètres qui varient dans la ligne d'échappement. En conséquence, il est parfois utile de prévoir une correction des quantités calculées au cours du procédé.

A cet effet, le procédé comprend l'étape de mesurer la quantité d'oxydes d'azote en entrée du catalyseur, et d'utiliser cette mesure dans l'étape de détermination de la quantité d'urée finale.

De façon similaire, le procédé comprend l'étape de mesurer la quantité d'ammoniac en sortie du catalyseur, et d'utiliser cette mesure pour déterminer la quantité d'urée à injecter. En effet, si on constate qu'une trop forte quantité d'urée est présente en sortie du catalyseur, il est nécessaire d'intervenir immédiatement pour ne pas risquer un dégagement nocif de gaz à l'extérieur du véhicule.

Le procédé selon l'invention comprend également les étapes suivantes :

- l'étape de déterminer une quantité d'urée maximale pouvant être injectée, en fonction de la température, et de déterminer la quantité à injecteur en fonction de cette quantité maximale et d'au moins un autre paramètre calculé ou mesuré dans la ligne d'échappement,
- l'étape de calculer la quantité d'ammoniac présente dans le catalyseur SCR, et d'utiliser ce calcul pour déterminer la quantité d'urée à injecter, et En variante un procédé selon l'invention comprend l'étape suivante:
- l'étape d'utiliser, pour la détermination de la quantité d'urée à injecter, des données prédéterminées, telles qu'une cartographie, enregistrées dans une mémoire d'un processeur utilisé pour la mise en oeuvre du procédé.

L'invention concerne également un système d'injection d'urée dans une ligne d'échappement de moteur, l'urée contenant de l'ammoniac destiné à être utilisé pour réduire chimiquement, au cours d'une réaction de réduction catalytique sélective, dite SCR, des oxydes d'azote émis par le moteur, le système comprenant :

- un catalyseur siège de la réaction de réduction,
- un dispositif de mesure de la température des gaz dans la ligne d'échappement, et
- un dispositif de calcul de la quantité d'urée à injecter dans le catalyseur à partir d'une relation connue entre la température et une quantité d'urée à injecter, pour l'ensemble des valeurs de température de fonctionnement possibles,
- un réservoir d'urée et un injecteur d'urée situés en amont du catalyseur, et destinés à injecter la quantité d'urée déterminée.

On va maintenant procéder à la description de plusieurs modes de réalisation du procédé, pour en faire apparaître d'autres avantages et caractéristiques. Cette description est effectuée à titre non limitatif, à l'aide des figures suivantes :

- la figure 1 montre l'évolution de certains paramètres présents dans un moteur de véhicule sur un cycle de fonctionnement connu, à savoir un cycle MVEG.
- la figure 2 montre une ligne d'échappement de véhicule équipée d'un injecteur d'urée liquide,
- la figure 3 est une représentation graphique d'une relation polynomiale liant une quantité-d'urée à une température,
- la figure 4 montre un diagramme fonctionnel de différentes stratégies d'injection d'urée, et
- la figure 5 montre le taux de conversion d'oxydes d'azote en fonction de la température.

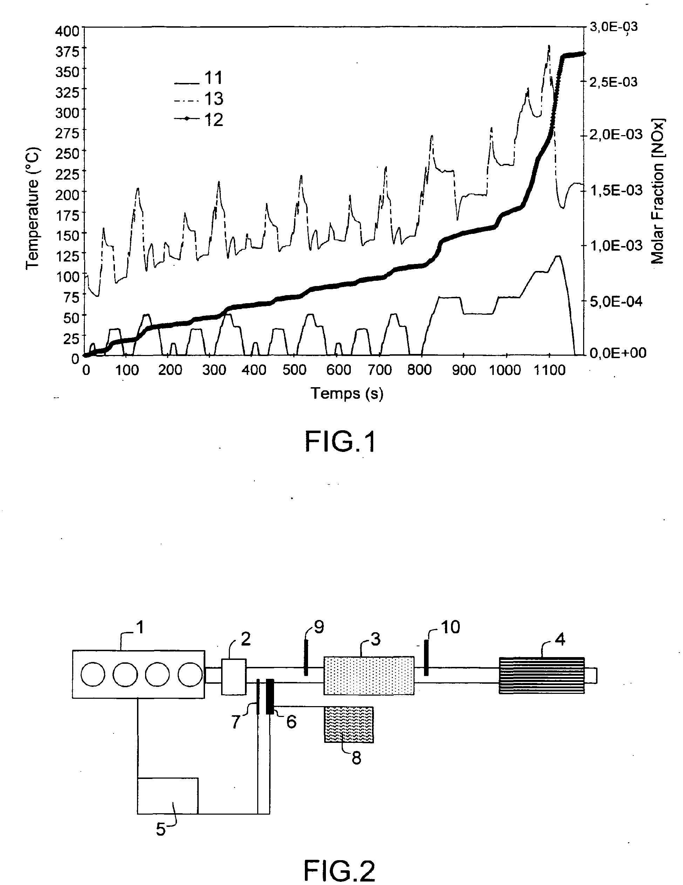

Sur la figure 1, on a représenté différents paramètres mesurés dans le moteur d'un véhicule automobile, sur un cycle de fonctionnement normalisé MVEG. Ce cycle est actuellement utilisé pour l'homologation des véhicules en Europe.
La figure 1 montre trois courbes, représentant respectivement l'évolution de la vitesse du véhicule (courbe 11), de la quantité d'oxydes d'azote dégagés par le moteur (courbe 12) et de la température (courbe 13), en fonction du temps.
Le fonctionnement du véhicule selon le cycle MVEG implique une succession d'accélérations et décélérations du véhicules. Ainsi, bien que la température dans le moteur aurait tendance à augmenter au cours du temps, cette augmentation est freinée par les décélérations fréquentes.
On peut ainsi constater que, pendant les 900 premières secondes du cycle, la température n'excède 180°C que de manière intermittente. Or, il a été précédemment expliqué qu'une telle température était nécessaire pour assurer une décomposition totale de l'urée en ammoniac et une absence de polymérisation.
En conséquence, il apparaît clairement, à la vue de ce graphique, que la mise en oeuvre d'un procédé classique de réduction d'oxydes d'azote par urée n'est pas envisageable sur des véhicules légers. Il est donc nécessaire d'utiliser un procédé conforme à l'invention, permettant une injection d'urée à basse température.
Une mise en oeuvre avantageuse de ce procédé est effectuée dans une ligne d'échappement telle que montrée en figure 2.
Sur cette figure on voit un moteur de véhicule 1, qui émet du monoxyde d'azote NO et du dioxyde d'azote $NO_2$. En sortie de ce moteur se trouve un catalyseur d'oxydation 2, utilisé pour augmenter le ratio $NO_2/NO$ des gaz d'échappement, permettant ainsi une meilleure réduction ultérieure des oxydes d'azote dans le catalyseur à réduction sélective 3.
Les gaz d'échappement traités transitent en dernier lieu par un filtre à particules 4 avant d'être rejetés dans l'atmosphère.
Afin de permettre la mise en oeuvre du procédé, les différents éléments de la ligne d'échappement sont gérés par l'ordinateur de bord 5 du véhicule. Ainsi, par exemple, à partir de la température des gaz, relevée par le dispositif 7, l'ordinateur 5 est en capacité de déterminer, à partir de données expérimentales enregistrées dans une mémoire, la quantité d'urée qui doit être injectée dans la ligne d'échappement par l'injecteur 6. L'urée est stockée dans un réservoir 8. Par ailleurs, la ligne d'échappement est munie de deux détecteurs de gaz 9 et 10 permettant de mesurer les quantités de gaz présents respectivement en amont et en aval du catalyseur SCR 3. Dans un exemple, l'ordinateur 5 utilise les mesures fournies par ces deux détecteurs pour commander l'injection d'urée dans le système.

Les données prédéterminées contenues dans une mémoire de l'ordinateur 5 peuvent être sous forme d'une cartographie, d'une table ou de tout autre ensemble de données.

Par exemple, on peut modéliser la relation entre la quantité d'urée à injecter et la température par une relation polynomiale égale à :

$$Y = 7E^{-06}x^3 + 0,0082x^2 - 2,5934x + 182,2$$

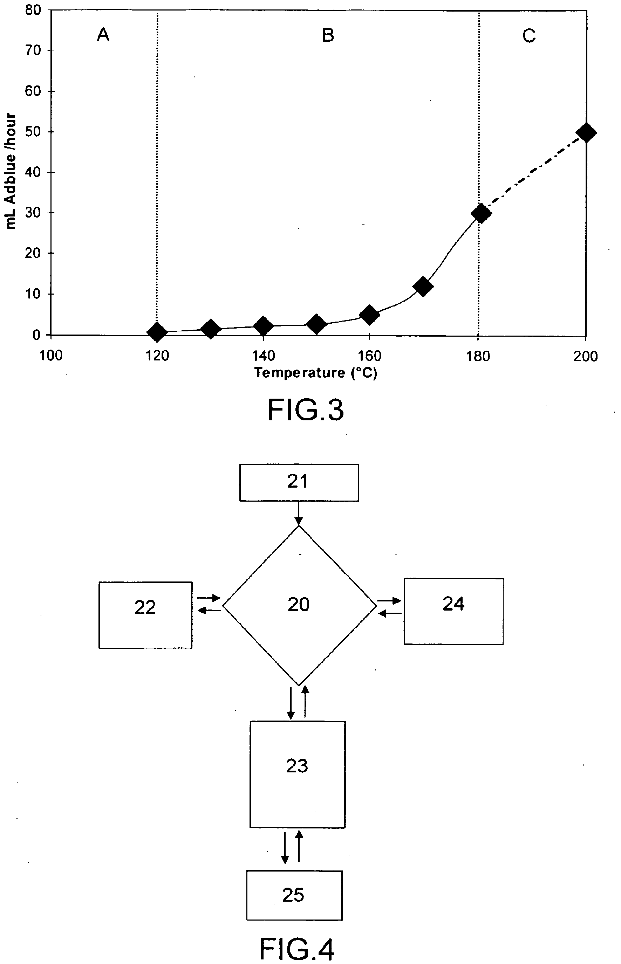

Cette relation est représentée graphiquement sur la figure 3 pour des températures variant de 100 à 200 °C. Ainsi, un ordinateur de véhicule, connaissant la valeur de température des gaz dans la ligne d'échappement, peut utiliser cette relation pour déterminer la quantité d'urée à injecter, par exemple sous forme d'un additif liquide tel que de l'AdBlue. Cette quantité est ici exprimée en millilitres par heure.

Afin de mieux comprendre un procédé d'injection selon l'invention, nous allons le décrire pour trois phases de fonctionnement du véhicule, ici distinguées en fonction de la température des gaz d'échappement.

La zone A correspond à des températures inférieures à 120°C. A de telles valeurs, on a constaté qu'il était inutile d'injecter de l'urée dans la ligne d'échappement, et ce pour plusieurs raisons :

- tout d'abord, à ces températures, l'évaporation de l'urée est relativement difficile, ce qui compromet la mise en oeuvre de la première réaction chimique nécessaire conduisant normalement à une formation de particules d'urée,
- par ailleurs, les catalyseurs SCR sont généralement tels qu'ils ne peuvent pas être actifs à moins de 120°C, et ils ne peuvent donc pas être le siège d'une décomposition d'urée en ammoniac. En outre, même si le catalyseur SCR contient déjà de l'ammoniac stocké dans ses micro-pores, la réduction des oxydes d'azote est impossible à des températures si basses.

En conséquence, dans cette zone de fonctionnement du véhicule, il n'est procédé à aucune injection d'urée.

La zone C correspond à des températures supérieures à 180°C. Il a précédemment été expliqué qu'à ces températures, on assistait à une décomposition totale et quasi-instantanée de l'urée en ammoniac. En conséquence, dans cette zone de fonctionnement, il est possible d'injecter dans la ligne d'échappement autant d'urée que nécessaire pour réduire les oxydes d'azote émis par le moteur.

La spécificité du procédé selon l'invention apparaît dans la zone de fonctionnement B, correspondant à des températures comprises entre 120°C et 180°C. En effet, dans cette gamme de température, la réaction d'hydrolyse (Eq3), qui correspond à une décomposition en phase gazeuse, ne peut avoir lieu. En conséquence, la décomposition d'urée en ammoniac n'est pas complète, et il convient donc de limiter la concentration en ammoniac injectée.

La relation permettant de calculer cette concentration est ainsi montrée dans la zone B de la figure 3. Elle doit être déterminée pour chaque type de moteur, puisqu'elle dépend d'un certain nombre de composants du moteur, tels que les injecteurs, la ligne d'échappement, ou encore les catalyseurs, par exemple de dépollution.

Pour une mise en oeuvre avantageuse de l'invention, on peut utiliser un processeur, par exemple installé dans un ordinateur de bord d'un véhicule automobile. Ce processeur peut utiliser différents paramètres, prédéterminés, calculés ou mesurés, pour déterminer la quantité d'urée devant être injectée dans la ligne d'échappement. L'intervention de ces différents paramètres est illustrée sur la figure 4.

Sur cette figure est représenté un processeur 20. Ce processeur est en communication avec un dispositif de mesure de température 21. Ce dispositif de température 21 est, dans une réalisation avantageuse, un thermocouple, c'est à dire un dispositif comportant deux métaux reliés par deux jonctions, et qui génère une différence de potentiel dépendant de la différence de température entre les deux jonctions. Afin de pouvoir relier la différence de potentiel à une différence de température, il est donc nécessaire de connaître la réponse du thermocouple en fonction de la température. Cette réponse est, par exemple, conservée dans une mémoire du processeur, afin de pouvoir être utilisée au cours d'une étape du procédé.

Ainsi, à partir de la température mesurée et de données 22 enregistrées dans une mémoire du processeur, il est possible de déterminer en premier lieu une quantité maximale d'urée qui peut être injectée en toute sécurité dans la ligne d'échappement, en fonction de la température. Les données 22 sont, par exemple, sous forme d'une ou plusieurs cartographies.

On détermine ensuite la quantité d'urée qu'il est réellement nécessaire d'injecter pour détruire tous les oxydes d'azote produits par le moteur en fonction de la quantité maximale d'urée, de la quantité d'ammoniac déjà stockée dans le catalyseur SCR, de la quantité d'ammoniac effectivement consommée par la réaction de réduction des oxydes d'azote, de la température et de la vitesse.

Les quantités d'ammoniac sont calculées par un calculateur 23, en fonction de la quantité d'oxydes d'azote produite par le moteur, et mesurées par l'intermédiaire d'un détecteur 24.

A cet effet, le calculateur utilise le taux de réaction de la consommation d'ammoniac, exprimé par la formule :

$$Taux = k.A.(-Ea/RT).[A]^{x}[B]^{y}[C]^{z}$$

dans laquelle :

- K est une constante
- A est un facteur exponentiel,
- Ea est l'énergie d'activation,
- R est la constante des gaz parfaits,
- T est la température,
- A, B et C sont les concentrations des espèces en réaction, aux ordres respectifs x, y et z.

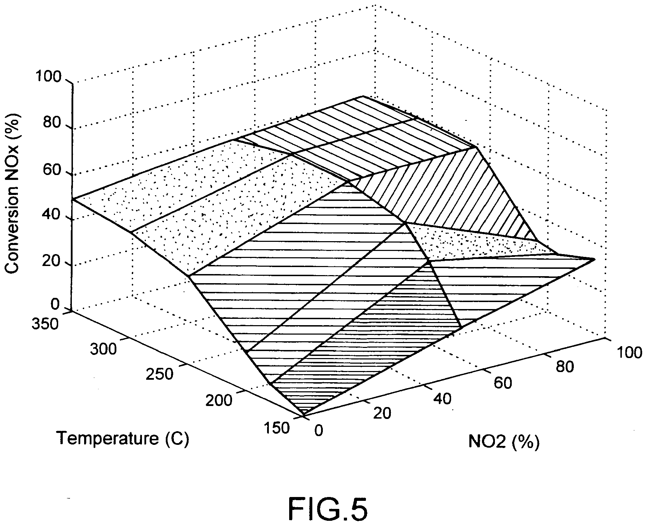

La quantité d'urée finalement déterminée est injectée dans la ligne d'échappement par l'intermédiaire de l'injecteur 25. La figure 5 illustre l'évolution de cette consommation d'ammoniac dans un catalyseur SCR en montrant le pourcentage de conversion d'oxydes d'azote en fonction de la température et du ratio de dioxyde d'azote par rapport au monoxyde d'azote.

La quantité d'ammoniac déjà présente dans le catalyseur est calculée en fonction de paramètres tels que la quantité d'urée injectée auparavant, la quantité d'urée consommée par la réaction de réduction, et la capacité de stockage du catalyseur.

Cette capacité de stockage est, par exemple, déterminée expérimentalement en fonction de l'âge du catalyseur. Elle dépend également du type de catalyseur, selon que l'on utilise un catalyseur à structure micro-poreuse, de grande capacité, ou un catalyseur non poreux.

L'ammoniac utilisé pour la réduction des oxydes d'azote peut se trouver dans n'importe quelle phase, liquide, gazeuse ou solide. Toutefois, ainsi que décrit dans la présente demande, on utilisera préférentiellement un additif tel que l'AdBlue, c'est à dire une solution aqueuse à 32,5% d'urée. Pour un véhicule Diesel classique, ayant un réservoir de grande capacité, le débit d'injection d'AdBlue est généralement de 20 à 40 litres par heure. La fréquence d'injection de l'urée peut varier de 1 à 100Hz, et on utilisera de préférence une fréquence de 10 Hz.

## Revendications

1.  Procédé d'injection d'urée dans une ligne d'échappement d'un moteur (1), l'urée contenant de l'ammoniac destiné à être utilisé pour réduire chimiquement, au cours d'une réaction de réduction catalytique sélective, dite SCR, des oxydes d'azote émis par le moteur (1), l'injection étant effectuée en amont d'un catalyseur (3) dans lequel a lieu la réaction, le procédé comprenant les étapes suivantes :

    - on mesure (7) la température dans la ligne d'échappement du moteur et si cette température mesurée est supérieure à une température d'activation du catalyseur,
    - on détermine la quantité d'urée nécessaire pour traiter les oxydes d'azote NOx présents dans les gaz d'échappement à ladite température, la détermination de cette quantité d'urée comprenant les étapes de mesure de la quantité d'oxydes d'azote (9) en entrée du catalyseur (3), de mesure de la quantité d'ammoniac (10) en sortie du catalyseur (3) et une étape de calcul de la quantité d'ammoniac présente dans le catalyseur SCR (3), le procédé est **caractérisé en ce que**
    - si la température mesurée est supérieure à 180°C, on injecte ladite quantité déterminée d'urée,
    - si la température mesurée est inférieure à 180°C, on détermine en fonction de la température mesurée, une quantité maximale d'urée pouvant subir une décomposition en ammoniac et être donc injectée dans la ligne d'échappement du moteur sans risque de polymérisation, et on injecte une quantité d'urée tenant compte de la quantité déterminée d'urée et de la quantité maximale d'urée.

**2.** Procédé selon la revendication 1, dans lequel on utilise, pour la détermination de la quantité d'urée à injecter, des données prédéterminées, enregistrées dans une mémoire d'un processeur (5) utilisé pour la mise en oeuvre du procédé.

**Claims**

**1.** A method for injecting urea in an exhaust line of an engine (1), the urea containing ammonia which is intended to be used for chemically reducing, during a selective catalytic reduction reaction, designated SCR, nitrogen oxides emitted by the engine (1), the injection being carried out upstream of a catalyst (3) in which the reaction takes place, the method comprising the following steps:

- the temperature in the exhaust line of the engine is measured (7), and if this measured temperature is greater than an activation temperature of the catalyst,
- the quantity of urea is determined which is necessary to process the nitrogen oxides NOx present in the exhaust gases at the said temperature, the determining of this quantity of urea comprising the steps of measuring the quantity of nitrogen oxides (9) at the input of the catalyst (3), of measuring the quantity of ammonia (10) at the output of the catalyst (3), and a calculation step of the quantity of ammonia present in the SCR catalyst (3), the method is **characterized in that**
- if the measured temperature is greater than 180°C, the said determined quantity of urea is injected,
- if the measured temperature is less than 180°C, as a function of the measured temperature a maximum quantity of urea is determined which is able to undergo an ammonia decomposition and to be therefore injected in the exhaust line of the engine without a risk of polymerisation, and a quantity of urea is injected, taking into account the determined quantity of urea and the maximum quantity of urea.

**2.** The method according to Claim 1, in which, for determining the quantity of urea which is to be injected, predetermined data are used which are saved in a memory of a processor (5), used for the implementation of the method.

**Patentansprüche**

**1.** Verfahren zum Injizieren von Harnstoff in eine Auspuffanlage eines Motors (1), wobei der Harnstoff Ammoniak enthält, das dazu bestimmt ist, verwendet zu werden, um chemisch im Laufe einer selektiven katalytischen Reduktionsreaktion, SCR genannt, Stickstoffoxide, die von dem Motor (1) abgegeben werden, zu reduzieren, wobei die Injektion stromaufwärts eines Katalysators (3), in dem die Reaktion stattfindet, ausgeführt wird, wobei das Verfahren die folgenden Schritte aufweist:

- Messen (7) der Temperatur in der Auspuffanlage des Motors und, wenn diese gemessene Temperatur größer ist als eine Aktivierungstemperatur des Katalysators,
- Bestimmen der erforderlichen Harnstoffmenge zum Behandeln der in den Abgasen bei der Temperatur vorliegenden Stickstoffoxyde NOx, wobei das Bestimmen dieser Harnstoffmenge die Schritte des Messens der Menge Stickstoffoxide (9) am Eingang des Katalysators (3), des Messens der Ammoniakmenge (10) am Ausgang des Katalysators (3) und einen Schritt des Berechnens der Ammoniakmenge, die in dem SCR-Katalysator (3) vorliegt, umfasst, wobei das Verfahren **dadurch gekennzeichnet ist, dass**
- man, wenn die gemessene Temperatur größer ist als 180 °C, die bestimmte Harnstoffmenge injiziert,
- man, wenn die gemessene Temperatur niedriger ist als 180 °C, in Abhängigkeit von der gemessenen Temperatur eine maximale Harnstoffmenge bestimmt, die einen Abbau in Ammoniak erfahren und daher in die Auspuffanlage des Motors ohne Polymerisationsgefahr injiziert werden kann, und man eine Harnstoffmenge injiziert, die die bestimmte Harnstoffmenge und die maximale Harnstoffmenge berücksichtigt.

**2.** Verfahren nach Anspruch 1, bei dem man zum Bestimmen der zu injizierenden Harnstoffmenge vorbestimmte Daten verwendet, die in einem Speicher eines Prozessors (5), der zum Umsetzen des Verfahrens verwendet wird, aufgezeichnet sind.

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102005035554 A
- US 6427436 B